Europäisches Patentamt

European Patent Office

Office européen des brevets

(19)

(11) Publication number: **0 180 257**
**A1**

## (12) EUROPEAN PATENT APPLICATION

(21) Application number: 85201511.4

(22) Date of filing: 20.09.85

(51) Int. Cl.⁴: **C08L 61/06** , C08J 5/24 ,
C08L 61/12

(30) Priority: 21.09.84 NL 8402895

(43) Date of publication of application:
07.05.86 Bulletin 86/19

(84) Designated Contracting States:
BE DE FR GB IT NL

(71) Applicant: DSM RESINS BV
Ceintuurbaan 5
NL-8022 AW Zwolle(NL)

(72) Inventor: Braber, Hans Pieter
Salviusstraat 15
NL-6141 LL Limbricht(NL)
Inventor: Tinkelenberg, Arie
Vriendenkringstraat 40
NL-6141 LJ Limbricht(NL)

(74) Representative: Leherte, Georges Maurice Lucien
Marie et al
Octrooibureau DSM P.O.Box 9
NL-6160 MA Geleen(NL)

(54) **Thermosetting resin composition based on resole resin.**

(57) The invention relates to thermosetting resin compositions, particularly moulding compounds, based on resole resin, thickener, glass fibre, fillers and if desired condensation catalysts and further usual additives, in which a precondensate of resorcinol and formaldehyde is used as a thickener.

EP 0 180 257 A1

## THERMOSETTING RESIN COMPOSITION BASED ON RESOLE RESIN

The invention relates to thermosetting resin compositions, particularly moulding compounds, based on resole resin, thickener, glass fibre, filters, if desired condensation catalysts and further usual additives.

Such resin compositions, which gradually thicken at room temperature, are known for instance from the US patent specification 4,075,155. The disadvantage of the thickeners described in this patent specification, such as $Ca(OH)_2$, $Mg(OH)_2$ and $Ba(OH)_2$, is that they function as catalysts for further reactions of the resole resin. The phenolic condensation reaction continues to proceed so that the resin composition does not acquire viscosity stability. The MgO thickener often used in unsaturated polyesters has the same disadvantage.

The object of the invention is to provide a thermosetting resin composition on the basis of resole resin, thickener, glass fibre, fillers, if desired condensation catalysts and further usual additives, which composition avoids the said disadvantages and is suitable for use as moulding compound.

The thermosetting resin composition according to the invention is characterized in that the thickener used is a precondensate of resorcinol and formaldehyde.

Such thermosetting resin compositions according to the invention are preferably used as moulding compounds, such as 'Sheet Moulding Compounds' (SMC), 'Bulk Moulding Compounds' (BMC) or 'Dough Moulding Compounds' (DMC).

Such processing techniques are known from, among other things, the lectures read during the '13th Offentliche Jahrestagung der Arbeitsgemeinschaft Verstärkte Kunststoffen' held from 5 till 7 October 1976. Said compounds can be processed also via injection moulding techniques.

The amount of precondensate of resorcinol and formaldehyde that is used according to the invention is 2-20% (wt) in respect of the resole resin. Preferably this amount is between 5 and 15% (wt). This amount in part depends on the viscosity of the resole resin, which is usually between 3000 and 15000 mPas. The resole resins are less suitable for being processed into moulding compound if the viscosity of the resins is higher or lower than these values.

The resorcinol-formaldehyde ratio in the precondensate is between 4:1 and 1.2:1 and is preferably about 2:1.

The fillers in the moulding compounds according to the invention comprise, for instance, marl, quartz powder, wood flour, coconut shell flour, Millicarb (filler of the firm Plüss Staufer AG) and talcum. Other additives are, for instance, release agents such as calcium stearate, zinc stearate and ACMOS (release agents of the firm of Tietjen & Co.,).

The condensation catalyst used may be alkali metal hydroxides and/or -carbonates.

For thermosetting resin compositions according to the invention to be used as sheet moulding compound preference is given to the use of compositions consiting of:

100 parts by weight resole resin,

5-15 parts by weight precondensate of resorcinol and formaldehyde

50-300 parts by weight filler,

0-20 parts by weight water,

10-175 parts by weight glass fibres,

0-15 parts by weight condensation catalyst,

and possibly further usual additives.

For thermosetting resin composition according to the invention to be used as bulk moulding compound or as dough moulding compound preference is given to the use of composition consisting of:

100 parts by weight resole resin,

2-20 parts by weight precondensate of resorcinol and formaldehyde
50-300 parts by weight filler,

0-15 parts by weight water,

0-25 parts by weight glass fibres,

0-15 parts by weight condensation catalyst,

and possibly further usual additives.

The thermosetting resin composition may contain, in addition to the precondensate of resorcinol and formaldehyde, a filler which is substantially water binding only above 50 °C. An example of such a water binding agent is gypsum anhydrite ($CaSO_4.OH_2O$).

It has been found that the curing of the moulding compounds according to the invention under pressure can be substantially improved by it.

The invention will be further elucidated by means of examples following hereinafter without, however, being limited thereto.

### Examples

#### A. Preparation of resole resins

#### Example 1

5980 g 90% phenol (the rest being water) are introduced into a reactor provided with a stirrer, thermometer, condenser and heating, resp. cooling coil.

After addition of 201 g 50% NaOH solution the mixture is heated. At about 80°C the metering of 3819 g paraform is started. Owing to the exothermic reaction that occurs, the temperature shows a quick further rise and by cooling it is kept at 95°C. During the cooling the metering of the paraform is interrupted. After about 20 minutes all paraform has been added and the reaction is continued for 15 minutes more at 95°C. To the resin 200 g caprolactam is added, upon which the condensation is continued until the desired resin viscosity has been reached (8000 mPas). The resin is cooled down to room temperature. The resulting resole resin 1 is applied in moulding compounds according to the examples following hereinafter.

## Example 2

Into a reactor as described in example 1 2990 g 90% phenol and 100.5 g 50% NaOH are introduced. 1909.5 g paraform is metered in the same manner as in example 1. After the metering of the paraform the condensation is continued at 95°C and the reaction proceeds as follows.

| continued condensation period | viscosity | water compatibility* |
|---|---|---|
| 20 minutes | 1170 mPa.s | 5.2 |
| 30   " | 2062   " | 3.1 |
| 40   " | 3375   " | 1.9 |
| 50   " | 6150   " | 1.2 |

* amount of water in grammes required to cause permanent turbidity in 1 gramme resin solution at 20¤C.

The temperature of the resin is subsequently lowered to 80¤C, upon which the condensation is continued until the resin has reached a viscosity of 10,000 mPas. The resulting resole resin II is applied in moulding compounds according to the examples following hereinafter.

### B. Preparation of a precondensate of resorcinol and formaldehyde

## Example 3

In a reactor provided with a stirrer, thermometer, condenser and heating, resp. cooling coil 100 grammes 30% formalin and 220 grammes resorcinol are heated to 95¤C. The heat of reaction is carried off by cooling and this temperature is maintained for 10 minutes. The resin is subsequently cooled to room temperature. Thus a precondensate of resorcinol and formaldehyde is obtained which is applied in the following examples.

### C. Preparation of sheet moulding compounds

## Example 4

2500 g phenolic resin (resole resin I from example 1), 250 grammes precondensate of resorcinol and formaldehyde, 3000 grammes Millicarb, 100 grammes zinc stearate and 10 grammes 50% NaOH solution are mixed in a mixer to form a homogeneous compound.

The compound is still more or less 'liquid'-comparable with cement mortar.

On an SMC machine a thin layer of compound is spread with a doctor blade on a pre-stretched polyethylene film. Subsequently, using a cutting device glass roving (30 % (wt) glass fibre calculated on the weight of the compound) is strewn on it, after which a second layer of compound, also applied to a polyethylene film, is applied on top. The resulting 'sandwich' of compound, glass fibre and compound is further compacted with a number of pressure rolls and a pressure belt so that the glass fibres are moistened by the resin. At the end of the machine the sheet - still packed in the polyethylene films - is rolled up.

After the thickening of the compound the polyethylene films can be pulled from the SMC. At this moment a non-sticky flexible sheet (plate) has been obtained.

Parts of this sheet are piled up and put in a hot mould in which they first flow out under heat and pressure until the mould is completely filled and subsequently cure to form the desired product. Moulding conditions are at 160¤C; pressure 100 kg/cm²; moulding period 3 minutes. The resulting objects are of good quality and show a smooth surface.

## Example 5

2000 g phenolic resin (resole resin II from example 2), 210 grammes precondensate of resorcinol and formaldehyde, 1500 grammes gypsum anhydrite (product AB 20 of the firm of BAYER), 1000 g Millicarb 85 grammes zinc stearate, 40 g water, 1800 g glass fibres are mixed as in example 4 and processed to form flexible sheet.

The moulding of this sheet moulding compound under the same conditons as in example 4 yields objects with a good quality and a smooth surface.

### Preparation of bulk moulding compounds

## Example 6

1100 g phenolic resin (resole resin II from example 2), 70 g precondensate of resorcinol and formaldehyde, 1500 g Millicarb, 60 g glass fibre, length approx. 2.5 cm, and 35 g zinc stearate are mixed as in example 4. The resulting compound can be succesfully moulded into objects according to the bulk moulding technique.

## Example 7

1100 g phenolic resin (resole resin II from example 2), 70 g precondensate of resorcinol and formaldehyde, 800 g gypsum anhydrite (product AB 20 of the firm of BAYER), 700 g Millicarb, 60 g glass fibre, length approx. 2.5 cm, and 35 g zinc stearate are mixed as in example 4. The resulting compound can be succesfully moulded into objects according to the bulk moulding technique.

### Preparation of dough moulding compounds

Example 8

1000 g phenolic resin (resole resin II from example 2), 20 g precondensate of resorcinol and formaldehyde, 1200 g Millicarb, 30 g zinc stearate and 55 g glass fibre, length approx. 2.5 cm, are mixed as in example 4. The resulting compound can be succesfully moulded into objects according to the dough moulding technique.

**Claims**

1. Thermosetting resin composition on the basis of resole resin, thickener, glass fibre, fillers, if desired condensation catalysts and further usual additives, characterized in that the thickener used is a precondensate of resorcinol and formaldehyde.

2. Thermosetting resin composition according to claim 1, characterized in that the amount of precondensate of resorcinol and formaldehyde is 2-20 % (wt) in respect of the resole resin.

3. Thermosetting resin composition according to claim 1, characterized in that the amount of precondensate of resorcinol and formaldehyde is 5-15 % (wt) in respect of the resole resin.

4. Thermosetting resin composition according to any one of claim 1-3, characterized in that the resorcinol-formaldehyde ratio of the precondensate is between 4:1 and 1.2:1.

5. Thermosetting resin composition according to claim 4, characterized in that the resorcinol-formaldehyde ratio is about 2:1.

6. Thermosetting resin composition according to any one of claims 1-5, characterized in that it has the form of a moulding compound.

7. Thermosetting resin composition according to any one of claims 1-6, characterized in that the precondensate of resorcinol and formaldehyde is applied together with a filler which is substantially water binding only above 50°C.

8. Thermosetting resin composition according to claim 7, characterized in that at least part of the filler is gypsum anhydrite.

9. Thermosetting resin composition according to any one of claims 1 to 8, for use as sheet moulding compound, characterized in that this composition consists of:

100 parts by weight resole resin,

5-15 parts by weight precondensate of resorcinol and formaldehyde

50-300 parts by weight filler,

0-20 parts by weight water,

10-175 parts by weight glass fibres,

0-15 parts by weight condensation catalyst,

and possibly further usual additives.

10. Thermosetting resin composition according to any one of claims 1 to 8, for use as bulk or dough moulding compound, characterized in that this composition consists of:

100 parts by weight resole resin,

2-20 parts by weight precondensate of resorcinol and formaldehyde,

50-300 parts by weight filler,

0-15 parts by weight water,

0-25 parts by weight glass fibres,

0-15 parts by weight condensation catalyst,

and possibly further usual additives.

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 426 484 (Y. SAEKI et al.) * Claims; column 2, lines 12-18, 48-49 * | 1-10 | |
| Y | | 1-6,10 | |
| Y | EP-A-0 020 102 (REDLAND TECHNOLOGY) * Claims * | 1-6,10 | |
| A | FR-A-2 246 596 (STAMICARBON) * Claims; page 2, lines 27-32 * | 1,7,8 | |

TECHNICAL FIELDS SEARCHED (Int. Cl.4)

C 08 L
C 08 J

The present search report has been drawn up for all claims

| Place of search | Date of completion of the search | Examiner |
|---|---|---|
| THE HAGUE | 18-12-1985 | DERAEDT G. |